# EUROPEAN PATENT SPECIFICATION

(11) **EP 2 356 336 B1**
(45) Date of publication and mention of the grant of the patent: **18.03.2015**
(21) Application number: 09760777.4
(22) Date of filing: 30.11.2009
(51) Int. Cl.: F03D 1/06

(54) **WIND TURBINE CONTROL SURFACE HINGE**
WINDTURBINENSTEUERFLÄCHENSCHARNIER
CHARNIÈRE DE SURFACE DE COMMANDE D'ÉOLIENNE

(30) Priority: 02.12.2008 GB 0821998; 02.12.2008 US 119203 P
(43) Date of publication of application: 17.08.2011
(73) Proprietor: Vestas Wind Systems A/S, 8200 Aarhus N (DK)
(72) Inventor: WESTERGAARD, Carsten Hein, 77010 Houston TX (US)
(86) International application number: PCT/EP2009/008524
(87) International publication number: WO 2010/063438

(56) References cited:
- US-A- 4 692 095
- US-A1- 2007 003 403
- US-A1- 2007 177 970

## Description

This invention relates to wind turbines and in particular to wind turbine blades having deflectable flaps.

Although most commercial wind turbines do not have movable control surfaces, there have in the past been a number of proposals to use flaps or ailerons in wind turbine blades to provide for additional control of the blade in reaction to changing wind conditions. An example of a known wind turbine blade having a trailing edge aileron is disclosed in US 5527151 of Northern Power Systems, Inc. The aileron disclosed can be used to brake the rotor by moving it into a position where lift destroying turbulence is generated by the gap between the aileron and the trailing edge of the blade. This produces sufficient drag to stop the blade.

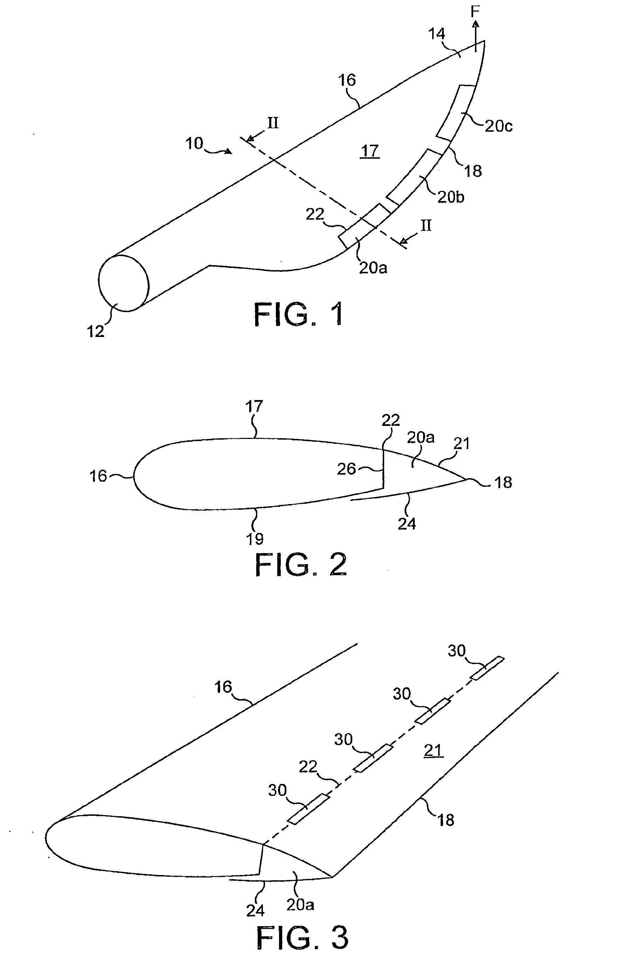

In the example of US 5527151 a gap between the blade and the flap is deliberately included. However, in modern wind turbine blade design it is generally considered undesirable to include a gap in the blade surface as this interferes adversely with the air flow under normal operating conditions and reduces the efficiency of energy extraction. Accordingly it is desirable to make the hinge that connects the flap to the blade flush with the blade. An example of this type of flap is shown in WO 2004/074681 of Forskningscenter Risoe. However this introduces a problem in moving the flaps which can be appreciated from figure 1. This figure shows a wind turbine blade which has three flaps arranged along its trailing edge. The modern blade is very long and is designed to deflect a considerable distance in the flapwise direction. This deflection makes it hard to control movement of the flap which tends to pop up from a closed position to a fully open position as the blade deflects. This problem is exacerbated by the hinge line being curved. Trailing edge flaps are attractive to designers of large modern wind turbines as they are useful in controlling random turbulence loading and asymmetrical loading, both of which are problems which increase with blade length.

US 4932095 describes a wind turbine with active spoilers disposed on the low pressure side of the blade which can be deployed to control an overspeed condition. US 2007/177970 describes a vertical axis wind turbine with a plate that is deployed to assist the wind turbine in starting at low wind velocities. US 2007/003403 describes a wind turbine with adjustable lift regulating means formed as a flexible flap, for control of a wind turbine rotor.

The invention aims to address this problem. Accordingly, there is provided a wind turbine rotor blade (10) comprising at least one movable control surface, the upper surface (17) of the blade defining a hinge along a hinge line (22), about which the control surface (20a) is movable, and the movable control surface (20a) is a flap;
the upper surface of the blade comprises a skin which extends across the hinge line (22), the skin forming at least a portion of the upper surface of the blade and at least a portion of an upper surface (21) of the control surface (20a); characterised in that:
the blade skin is provided with one or more slots (30) along the hinge line (22) and the one or more slots surround the hinge line.

Embodiments of the inventions have the advantage that the tendency for the flap or other control surface to pop-up when the blade is bending in a flapwise direction is avoided, so allowing smooth deployment of the flap or other control surface.

Preferably the one or more slots are filled with a soft deformable material such as a silicone rubber. This has the advantage of ensuring that smooth airflow is maintained over the hinge avoiding turbulence over the flap surface which is undesirable. The deformable material may comprise pre-moulded plugs.

Preferably the upper surface of the blade has one or more areas of strengthening around the one or more slots. The areas of strengthening may be included in the blade moulding process and compensate for any loss of strength caused by forming slots along the hinge line.

The upper surface of the blade may be a single skin forming the entire upper blade surface and the upper flap surface or a portion of the upper blade surface that also forms a portion of the upper flap surface and defines the hinge line.

In one preferred embodiment a mechanical hinge is arranged under the flap hinge. A mechanical hinge may be desirable in addition to the hinge in the upper blade surface, for example where the flap is relatively large.

Preferably a plurality of slots are substantially evenly spaced along the hinge line. Strengthening may then be provided around each of the slots evenly along the length of the hinge.

Preferably the flap is a trailing edge flap. Embodiments of the invention are particularly advantageous where the hinge line is curved as the tendency for the flap to pop-up is most pronounced where the hinge line is not straight.

The invention also provides a wind turbine having a rotor comprising two or more rotor blades as defined above.

Embodiments of the invention will now be described, by way of example only, and with reference to the accompanying drawings, in which:
Figure 1 (referred to above) shows a wind turbine blade having a plurality of trailing edge flaps;
Figure 2 is a cross- section through a blade and a flap showing the hinge line; and
Figure 3 is a section of a blade and a flap illustrating an embodiment of the invention.

The following description is given with respect to a wind turbine blade having a plurality of trailing edge flaps. However, the invention is applicable to a blade having only a single trailing edge flap or any number of trailing edge flaps as desired. Although the invention is presently intended for use with trailing edge flaps, it is also applicable to single and multiple flaps and other control surfaces positioned at other locations on the blade, for example on the leading edge.

Figure 1 shows a wind turbine rotor blade 10 having a root 12, tip 14, leading edge 16 and trailing edge 18. The blades of a large commercial scale wind turbine are typically made of resiliently deformable material such as GRP (Glass Reinforced Plastics). This may typically be glass fibre reinforced epoxy or polyester. Each blade has a central beam or area of strengthening that extends along its length with a skin or surface forming upper and lower surfaces 17, 19 of the blade. The skin is continuous over the blade surface. Although for larger blades it may be modular and formed from several sections. As is well understood in the art, the blade has a degree of twist such that the angle of attack of the leading edge of the blade is steeper at the root of the blade than at the tip.

The rotor blades are designed to flex and deform significantly as they rotate in response to oncoming wind. Deformation may be in an edgewise direction or a flapwise direction or a combination of the two. The deformation combined with the blade twist has a effect on the performance of flaps. Figure 1 shows a rotor blade having three trailing edge flaps 20a, 20b, 20c. This number is shown as an example only and any number of flaps may be provided depending on the length of the blade and the amount of control required from the flap. The flaps deflect up and down in the flapwise direction in response to wind conditions and optionally under the control of a wind turbine controller. The upper surface 21 of the flaps is an extension of the blade surface and so is made from the same continuous skin as the upper blade surface with the inboard edge of the flap being defined by a hinge line 22. As can be seen from figure 1, the trailing edge of the blade, along which the flaps are arranged is curved and the flaps themselves and their hinge lines are also curved. Under conditions of flapwise blade bending this prevents the flaps from deflecting freely up and down. In this case, the flaps tend to pop-up from a position flush with the blade to a fully extended position. Clearly this is undesirable. The direction of flapwise bending is indicated by the arrow marked F in Figure 1.

Figure 2 shows a cross section through the blade on the line II - II in figure 1. The continuous surface of the blade skin can be seen extending over and forming the upper surface of the flap with the flap being defined by the hinge line. Alternatively, the covering over the flap may comprise a thin film that bridges the hinge line or the outer layer of the material of the upper blade surface. The lower surface of the flap is here shown as a surface 24 that is free at its inboard end to slide over the lower surface 19 of the blade as the flap deforms. However, this is only one example of a flap construction and other lower flap surface configurations are possible. An end wall 26 extends between the upper and lower surfaces of the blade to define the trailing end of the blade and is arranged below the hinge line.

In figure 2, the hinge line 22 in the upper blade skin 17 is shown as the only means by which the flap can deflect. Although not shown, a mechanical hinge may also be included and which can be arranged to extend along the hinge line under the skin.

Figure 3 shows how the blade skin may be modified along the hinge line to prevent the problem of the flaps popping up as the blade deflects in the flapwise direction. A plurality of slots 30 are formed in the skin along the hinge line. Preferably, these slots are then filled with a resilient material such as silicone rubber. This material is chosen to be soft and deformable. It is advantageous to fill the slots to maintain a smooth upper surface on the blade and so to maintain a smooth airflow over the blade. It is particularly advantageous to avoid turbulence on a control surface such as the upper surface of the flap. The number of slots in the skin will depend on the length of the flap and may vary from a single long slot to many slots distributed along the length of the flap. Preferably the distribution of the slots along the hinge is even, such that the distance between adjacent slots is substantially the same.

The inclusion of slots along the hinge line introduces a weakness that could lead to breaking or cracking along the hinge line, particularly with repeated deployment. To prevent this, and to strengthen the hinge line, the skin around the slots is strengthened to compensate for the loss of material at the slots. Thus, one or more areas of strengthening or reinforcement is applied around the slots.

The strengthening of the hinge line may be part of the blade moulding process. The slot positions are preferably marked on the mould and the reinforcement is added around these marked positions as additional layers of GRP material or other material depending on the composition of the blade. When the blade is removed from the mould, the slot markings remain visible and the slots can then be machined using a milling tool. The slots can then be filled with the soft deformable material.

It will be appreciated that the inclusion of slots along the hinge line enables the flap to deflect smoothly even under conditions of severe flapwise bending. The reinforcement of the skin around the slots ensures that the hinge has the substantially same strength as a hinge with no slots, and the soft deformable filling of the slots ensures that smooth airflow is maintained over the slotted hinge.

The embodiment has been described with respect to a blade having one or more trailing edge flaps but it is applicable to one or more flaps or ailerons located at any point on the blade for any purpose, for example on the leading edge or at the blade tip acting as a tip brake. The invention is applicable to any flap or other control surface which uses the blade skin as a hinge, whether or not this is supplemented by a mechanical hinge. Thus, the invention may be applied to slats or to spoilers, for example. Although in the embodiment described the skin is continuous, it could be made up of a number of separate pieces or sections at least one of which forms the overlap between the blade body and the flap and so defines the hinge. This construction might be adopted, for example, with a modular blade assembly where the blade is formed from several separate sections which are then joined together.

The wind turbine blade described above may be used with any suitable wind turbine rotor, for example a rotor having two or three blades.

## Claims

1. A wind turbine rotor blade (10) comprising at least one movable control surface, the upper surface (17) of the blade defining a hinge along a hinge line (22), about which the control surface (20a) is movable, and the movable control surface (20a) is a flap;
the upper surface of the blade comprises a skin which extends across the hinge line (22), the skin forming at least a portion of the upper surface of the blade and at least a portion of an upper surface (21) of the control surface (20a); **characterised in that**:
the blade skin is provided with one or more slots (30) along the hinge line (22) and the one or more slots surround the hinge line.

2. A wind turbine rotor blade (10) according to claim 1, wherein the one or more slots (30) are filled with a soft deformable material.

3. A wind turbine rotor blade (10) according to claim 2, wherein the soft deformable material is a silicone rubber.

4. A wind turbine rotor blade (10) according to claim 2 or 3, wherein the deformable material comprises pre-moulded plugs.

5. A wind turbine rotor blade according (10) to any of claims 1 to 4, wherein the upper surface of the blade has one or more areas of strengthening around the one or more slots (30).

6. A wind turbine rotor blade (10) according to any preceding claim, comprising a mechanical hinge arranged under the control surface hinge.

7. A wind turbine rotor blade (10) according to any preceding claim, comprising a plurality of slots (30) substantially evenly spaced along the hinge line (22).

8. A wind turbine blade (10) according to claim 1, wherein the flap (20a) is a trailing edge flap.

9. A wind turbine blade (10) according to any preceding claim, wherein the hinge line (22) is curved.

10. A wind turbine having a rotor comprising two or more rotor blades (10) according to any preceding claim.

## Patentansprüche

1. Windturbinenrotorblatt (10), umfassend mindestens eine bewegliche Steuerfläche, wobei die obere Fläche (17) des Blattes ein Scharnier entlang einer Scharnierlinie (22) definiert, um die die Steuerfläche (20a) beweglich ist, und die bewegliche Steuerfläche (20a) eine Klappe ist;
die obere Fläche des Blattes eine Haut umfasst, die sich über die Scharnierlinie (22) erstreckt, die Haut mindestens einen Abschnitt der oberen Fläche des Blattes und mindestens einen Abschnitt einer oberen Fläche (21) der Steuerfläche (20a) bildet; **dadurch gekennzeichnet, dass**:
die Blatthaut mit einem oder mehreren Schlitzen (30) entlang der Scharnierlinie (22) versehen ist und der eine oder die mehreren Schlitze die Scharnierlinie umgeben.

2. Windturbinenrotorblatt (10) gemäß Anspruch 1, bei dem der eine oder die mehreren Schlitze (30) mit einem weichen verformbaren Werkstoff gefüllt sind.

3. Windturbinenrotorblatt (10) gemäß Anspruch 2, bei dem der weiche verformbare Werkstoff ein Silikongummi ist.

4. Windturbinenrotorblatt (10) gemäß einem der Ansprüche 2 oder 3, bei dem der verformbare Werkstoff vorgeformte Stopfen aufweist.

5. Windturbinenrotorblatt (10) gemäß einem der Ansprüche 1 bis 4, bei dem die obere Fläche des Blattes einen oder mehrere Verstärkungsbereiche um den einen oder die mehreren Schlitze (30) aufweist.

6. Windturbinenrotorblatt (10) gemäß einem der vorhergehenden Ansprüche, umfassend ein mechanisches Scharnier, das unter dem Steuerflächenscharnier angeordnet ist.

7. Windturbinenrotorblatt (10) gemäß einem der vorhergehenden Ansprüche, umfassend eine Vielzahl von Schlitzen (30), die im Wesentlichen entlang der Scharnierlinie (22) gleich beabstandet sind.

8. Windturbinenrotorblatt (10) gemäß Anspruch 1, bei dem die Klappe (20a) eine Abströmkantenklappe ist.

9. Windturbinenrotorblatt (10) gemäß einem der vorhergehenden Ansprüche, bei dem die Scharnierlinie (22) gekrümmt ist.

10. Windturbine, die einen Rotor aufweist, der zwei oder mehr Rotorblätter (10) gemäß einem der vorhergehenden Ansprüche umfasst.

## Revendications

1. Pale de rotor de turbine d'éolienne (10) comprenant au moins une surface de commande mobile, la surface supérieure (17) de la pale définissant une charnière le long d'une ligne d'articulation (22) autour de laquelle la surface de commande (20a) est mobile, et la surface de commande mobile (20a) est un volet ;
la surface supérieure de la pale comprenant une peau qui s'étend en travers de la ligne d'articulation (22), la peau formant au moins une portion de la surface supérieure de la pale et au moins une portion d'une surface supérieure (21) de la surface de commande (20a) ; **caractérisée en ce que**
la peau de la pale est pourvue d'une ou plusieurs fentes (30) le long de la ligne d'articulation (22) et les une ou plusieurs fentes entourent la ligne d'articulation.

2. Pale de rotor de turbine d'éolienne (10) selon la revendication 1, dans laquelle les une ou plusieurs fentes (30) sont remplies d'un matériau déformable mou.

3. Pale de rotor de turbine d'éolienne (10) selon la revendication 2, dans laquelle le matériau déformable mou est un caoutchouc de silicone.

4. Pale de rotor de turbine d'éolienne (10) selon la revendication 2 ou la revendication 3, dans laquelle le matériau déformable comprend des bouchons pré-moulés.

5. Pale de rotor de turbine d'éolienne (10) selon l'une quelconque des revendications 1 à 4, dans laquelle la surface supérieure de la pale a une ou plusieurs zones de renforcement autour des une ou plusieurs fentes (30).

6. Pale de rotor de turbine d'éolienne (10) selon l'une quelconque des revendications précédentes, comprenant une charnière mécanique aménagée en dessous de la charnière de la surface de commande.

7. Pale de rotor de turbine d'éolienne (10) selon l'une quelconque des revendications précédentes, comprenant une pluralité de fentes (30) espacées de manière sensiblement uniforme le long de la ligne d'articulation (22).

8. Pale de rotor de turbine d'éolienne (10) selon la revendication 1, dans laquelle le volet (20a) est un volet de bord de fuite.

9. Pale de rotor de turbine d'éolienne (10) selon l'une quelconque des revendications précédentes, dans laquelle la ligne d'articulation (22) est incurvée.

10. Turbine d'éolienne ayant un rotor comprenant deux pales de rotor (10) ou plus selon l'une quelconque des revendications précédentes.
